# FASCICULE DE BREVET EUROPEEN

(11) **EP 4 204 205 B1**
(45) Date de publication et mention de la délivrance du brevet: **17.04.2024**
(21) Numéro de dépôt: 21806718.9
(22) Date de dépôt: 08.11.2021
(51) Int. Cl.: B29C 53/08, F16L 9/12, F16L 9/128, F16L 9/14

(54) **PROCEDE DE FABRICATION D'UNE CANALISATION THERMOPLASTIQUE RENFORCEE COMPORTANT UNE PORTION CINTREE**
HERSTELLUNGSVERFAHREN FÜR EIN VERSTÄRKTES THERMOPLASTISCHES ROHR MIT EINEM GEBOGENEN ABSCHNITT
MANUFACTURING METHOD FOR A REINFORCED THERMOPLASTIC PIPE COMPRISING A BENT PORTION

(30) Priorité: 19.11.2020 FR 2011878
(43) Date de publication de la demande: 05.07.2023
(73) Titulaire: Airbus Atlantic, 17300 Rochefort (FR)
(72) Inventeur: PERHERIN, Daniel, 44600 SAINT NAZAIRE (FR); BOULZE, Daniel, 31840 AUSSONNE (FR); HALLAK, Nicolas, 31770 COLOMIERS (FR)
(74) Mandataire: Argyma
(86) Numéro de dépôt international: PCT/EP2021/080892
(87) Numéro de publication internationale: WO 2022/106231

(56) Documents cités:
- EP-A1- 3 285 985
- EP-A1- 3 548 196
- FR-A1- 3 081 532
- US-A1- 2014 238 525
- US-A1- 2019 113 158

## Description

### DOMAINE TECHNIQUE

La présente invention concerne le domaine des canalisations destinées à être montées dans un circuit de fluide d'un aéronef, par exemple un circuit d'eau potable, d'eaux usées, etc.

De manière connue, un circuit de fluide comporte une pluralité de canalisations reliées mécaniquement et fluidiquement entre elles. Lors de la mise en place d'un circuit de fluide dans un aéronef, les canalisations sont solidarisées de manière indépendante à la structure de l'aéronef puis raccordées entre elles fluidiquement.

En pratique, lors de la mise en place du circuit de fluide dans un aéronef, un jeu de montage est conservé pour prendre en compte des déformations ou déplacements relatifs entre les canalisations et la structure porteuse.

Lors de la mise en circulation du fluide dans le circuit de fluide, chaque canalisation est mise sous pression entrainant l'apparition d'efforts radiaux et longitudinaux. En pratique, lorsque l'ensemble du circuit de fluide est mis sous pression, le jeu axial est consommé et il peut apparaitre un phénomène de flambage dans une ou plusieurs canalisations, ce qui peut endommager les canalisations.

De plus, afin d'alléger la masse d'un aéronef, les canalisations sont de plus en plus fabriquées à partir de tubes en matériau thermoplastique, et plus particulièrement à partir de tubes réalisés entièrement en matière polymère de la famille des polyaryléthercétones, connus sous l'acronyme PAEK, tel que le PEEK (polyétheréthercétone) ou le PEKK (polyethercetonecetone), qui permet la fabrication de canalisations semi-rigides, légères et robustes. Une telle canalisation thermoplastique présente également une épaisseur faible. Une canalisation thermoplastique de fine épaisseur peut être impactée par le phénomène de flambage décrit précédemment.

Pour éliminer cet inconvénient, une solution immédiate serait de renforcer le tube thermoplastique lors de sa fabrication, par exemple en intégrant des fibres de renfort au matériau thermoplastique, telles que des fibres de carbone. Cependant, un tel tube connu sous la désignation de « tube carbone » est plus coûteux et présente l'inconvénient d'être très difficile à cintrer. En effet, lors du montage d'un circuit de fluide, les canalisations présentent chacune un profil prédéterminé pour suivre par exemple les courbures de la structure de l'aéronef ou contourner un équipement. Pour cela, chaque canalisation peut localement être courbée, on parle de cintrage. Un tube carbone ne peut pas être cintré de manière pratique et ne peut donc pas être monté dans un circuit de fluide d'un aéronef de manière simple.

Une autre solution évidente serait d'utiliser des canalisations fabriquées à partir de tubes réalisés dans un matériau plus résistant, par exemple du métal, mais cela va à l'encontre de la réduction de masse d'un circuit de fluide pour un aéronef.

En résumé, il n'existe pas, à ce jour, de solution pour monter dans un circuit de fluide, une canalisation capable de résister au flambage tout en étant légère et en respectant les spécificités techniques d'un aéronef.

L'invention vise ainsi à éliminer au moins certains de ces inconvénients en proposant un procédé de fabrication d'une canalisation thermoplastique renforcée, légère, robuste et comprenant l'ensemble des caractéristiques capables de répondre aux exigences techniques d'un aéronef. De plus, la canalisation peut être facilement cintrée tout en conservant ses propriétés mécaniques et sa tenue au flambage. On connait du document FR3081532A1 un procédé de fabrication d'une canalisation thermoplastique destinée à être montée dans un circuit de fluide d'un aéronef.

### PRESENTATION DE L'INVENTION

Une canalisation destinée à être montée dans un circuit de fluide d'un aéronef comprend un tube et deux extrémités de connexion, le tube étant constitué d'un matériau thermoplastique et présentant une forme cylindrique, le tube définissant une surface intérieure, destinée à être en contact avec le fluide, et une surface extérieure opposée à la surface intérieure.

La canalisation est remarquable en ce qu'elle comprend au moins une bande de renfort s'étendant longitudinalement sur la surface extérieure d'une portion longitudinale du tube, de manière à former une portion renforcée du tube.

La canalisation est ainsi localement renforcée et peut résister aux efforts de flambage dus à la mise sous pression du circuit de fluide. Grâce à la bande de renfort, la canalisation peut être fabriquée à partir des tubes de l'art antérieur, ce qui limite l'impact des coûts de renforcement de la canalisation. De plus, l'ajout d'une bande de renfort permet de résister au flambage tout en conservant des tubes d'épaisseur fine qui sont plus légers, moins coûteux et faciles à manipuler. La canalisation comprenant un tube en matériau thermoplastique et renforcée est ainsi à la fois légère et robuste.

L'ajout d'une bande de renfort sur un tube thermoplastique existant est également simple et rapide à réaliser et n'a que peu d'impact sur le coût de production.

De manière préférée, la bande de renfort comprend des fibres de renfort imprégnées dans une résine thermoplastique. La bande de renfort est ainsi légère tout en présentant une résistance importante.

De préférence, la résine thermoplastique de la bande de renfort est identique au matériau thermoplastique du tube, permettant une liaison robuste entre le tube et la bande de renfort tout en assurant un comportement similaire à la jonction entre le tube et la bande de renfort. Un tel matériau identique permet de limiter les risques de modification du matériau du tube à l'interface entre le tube et la bande de renfort, ce qui permet de ne pas impacter les propriétés mécaniques de la canalisation.

De préférence, la résine thermoplastique de la bande de renfort et du tube est un polymère de la famille des polyaryléthercétones, connus sous l'acronyme PAEK, tel que le PEEK (polyétheréthercétone) ou le PEKK (polyethercetonecetone), permettant l'utilisation d'un matériau dont le comportement est connu.

De manière préférée, les fibres de renfort sont des fibres unidirectionnelles, permettant de renforcer le tube tout en assurant une fabrication simple et rapide de la bande de renfort.

De préférence, les fibres de renfort sont des fibres de verre, des fibres de carbone, d'aramide ou toutes autres fibres naturelles, ce qui permet d'assurer une rigidité importante à la bande de renfort et permet d'assurer la résistance de la canalisation au flambage.

Dans une forme de réalisation préférée, dans un plan en coupe transversale, la ou les bandes de renfort s'étendent sur une plage angulaire comprise entre 28 et 58 ° à la périphérie de la portion renforcée. Une telle plage angulaire permet de couvrir une partie importante de la surface extérieure, permettant un renfort optimal, sans nécessiter de recouvrir entièrement la portion à renforcer du tube, ce qui limite l'augmentation de sa masse et l'impact sur sa fabrication.

De préférence, la plage angulaire est fonction du rayon du tube et représente un pourcentage compris entre 31 et 64 % du périmètre extérieur du tube.

De manière préférée, la portion renforcée comprend une pluralité de bandes de renfort, réparties angulairement sur la surface extérieure de portion renforcée et positionnées à équidistance les unes des autres.

Dans une forme de réalisation, la portion renforcée comprend au moins trois bandes de renfort réparties angulairement sur la surface extérieure de la portion renforcée et positionnées à équidistance les unes des autres. Une telle répartition permet un renforcement équivalent de toute la périphérie du tube, permettant d'assurer une résistance radiale uniforme au flambage.

Dans une forme de réalisation alternative, la portion renforcée comprend quatre bandes de renfort réparties angulairement sur la surface extérieure de la portion renforcée et positionnées à équidistance les unes des autres. Un positionnement de quatre bandes de renfort permet une répartition optimale des bandes de renfort à la périphérie du tube, permettant une résistance radiale à la pression uniforme. De plus, l'application de quatre bandes de renfort permet l'utilisation de bandes de renfort présentant une largeur de ¼ de pouce (6,35 mm) connues tout en garantissant une couverture optimale de 31%, 43% ou 64% de la surface extérieure du tube, correspondant respectivement à un tube de diamètre 1 pouce (25,4 mm), ¾ de pouce (19,05 mm) ou ½ pouce (12,7 mm).

Dans une forme de réalisation, la bande de renfort présente une largeur comprise entre 1/8 de pouce (3,2mm) et ½ pouce (12,7 mm). De préférence encore, la bande de renfort présente une largeur de ¼ de pouce (6,35 mm), permettant l'utilisation de bandes de renfort connues. Aussi la bande de renfort ne nécessite ni un procédé de fabrication particulier, ni l'utilisation de machines spécifiques. L'utilisation d'une telle bande de renfort permet un gain de temps dans la fabrication de la canalisation renforcée.

De manière préférée, la bande de renfort présente une épaisseur comprise entre 0,1 et 0,4 mm. Ainsi, la ou les bandes de renfort augmentent très peu l'épaisseur du tube, permettant de monter le tube renforcé dans les machines de production et particulièrement dans les machines de cintrage existantes. Les portions renforcées de tube n'impactent pas le processus industriel de fabrication d'une canalisation.

Il est présenté un circuit de fluide comprenant au moins une première canalisation et une deuxième canalisation telles que décrites précédemment, une première extrémité de connexion de la première canalisation étant montée en vis-à-vis de l'une des extrémités de connexion de la deuxième canalisation.

L'invention a ainsi pour objet un procédé de fabrication d'une canalisation selon les revendications 1 à 8.

Grâce à la distinction des portions à renforcer et des portions à cintrer au début du procédé, seules les portions à renforcer sont destinées à l'être. Les portions qui ne doivent pas être renforcées, comme les portions à cintrer par exemple, sont exemptes de l'application de bande de renfort et peuvent suivre la chaine de fabrication habituelle. Une telle caractéristique permet de garantir le cintrage des portions à cintrer après la dépose des bandes de renfort sur les portions à renforcer, permettant après la dépose des bandes de renfort de garantir la ligne de production habituellement connue de l'art antérieur.

Un tel procédé de fabrication permet d'assurer un renfort local uniquement sur une portion ciblée, ce qui permet de garantir la continuité de la ligne de production existante.

Dans un mode de mise en oeuvre, la bande de renfort comprenant une surface inférieure, destinée à être en contact avec la surface extérieure du tube, et une surface supérieure opposée à la surface inférieure, le procédé comprend, postérieurement à l'étape de positionnement d'au moins une bande de renfort, une étape de positionnement d'au moins un organe de pression au contact de la surface supérieure de la bande de renfort, l'organe de pression étant configuré pour appliquer une pression radiale.

L'étape de positionnement peut être réalisée par au moins trois organes de pression répartis angulairement à la périphérie du tube sur la surface extérieure, les trois organes de pression étant positionnés à équidistance les uns des autres, au moins un organe de pression étant positionné au contact de la surface supérieure de la bande de renfort, le procédé comprend une étape d'application simultanée d'un effort de pression radial et identique par les trois organes de pression sur la surface extérieure du tube, de manière à déposer la bande de renfort tout en assurant une pression uniforme sur toute la périphérie de la portion à renforcer du tube.

Une application simultanée d'un même effort de pression par trois organes de pression répartis angulairement sur la surface extérieure du tube permet d'éviter toute déformation du tube au cours de l'application des bandes de renfort. Le procédé n'affecte ainsi pas la résistance de la canalisation.

Selon un aspect, chaque organe de pression se présente sous la forme d'un rouleau apte à évoluer longitudinalement le long du tube.

De manière alternative, chaque organe de pression est fixe, le tube étant configuré pour se déplacer longitudinalement.

Selon un aspect, le procédé comprend postérieurement à l'étape de positionnement d'au moins une bande de renfort, une étape de chauffage de la surface extérieure de la portion à renforcer du tube et/ou de la bande de renfort, de manière à permettre une soudure de la bande de renfort sur la portion à renforcer pour former la portion renforcée.

Selon un aspect, le procédé comprend postérieurement à l'étape de positionnement d'au moins une bande de renfort, une étape de soudure de la bande de renfort sur la surface extérieure de la portion à renforcer du tube, de manière à former la portion renforcée. L'application des bandes de renfort est ainsi simple et rapide à réaliser, ce qui n'impacte que très peu les délais de fabrication des canalisations.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'une canalisation destinée à être montée dans un circuit de fluide.
La figure 2 est une représentation schématique d'une canalisation renforcée.
La figure 3 est une représentation schématique d'une vue en coupe transversale de la canalisation renforcée de la figure 2.
La figure 4 est une vue en coupe transversale d'une canalisation renforcée.
La figure 5 est une représentation schématique d'une bande de renfort destinée à être montée sur la canalisation renforcée.
La figure 6 est une vue en coupe transversale de la bande de renfort de la figure 5.
La figure 7 est une représentation schématique des étapes d'un procédé de fabrication d'une canalisation renforcée selon un mode de mise en oeuvre de l'invention.
La figure 8 est une représentation schématique de l'étape de fixation simultanée d'une pluralité de bandes de renfort sur un tube thermoplastique.
La figure 9 est une vue en coupe transversale de l'étape de fixation simultanée de la pluralité de bandes de renfort sur le tube thermoplastique.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Il est décrit une canalisation destinée à être montée dans un circuit de fluide d'un aéronef, par exemple un circuit d'eau potable. Comme décrit précédemment, un circuit de fluide comporte une pluralité de canalisations reliées mécaniquement et fluidiquement entre elles et dans laquelle circule un fluide.

Comme décrit précédemment, chaque canalisation 1 présente un profil prédéterminé pour suivre par exemple les courbures de la structure de l'aéronef ou contourner un équipement. Pour cela, chaque canalisation 1 peut localement être cintrée. Aussi, on distingue dans cette demande, un état initial de la canalisation 1 avant cintrage, c'est-à-dire que la canalisation 1 s'étend longitudinalement sur toute sa longueur, et un état final après cintrage, c'est-à-dire un état dans lequel la canalisation 1 présente une ou plusieurs portions courbées.

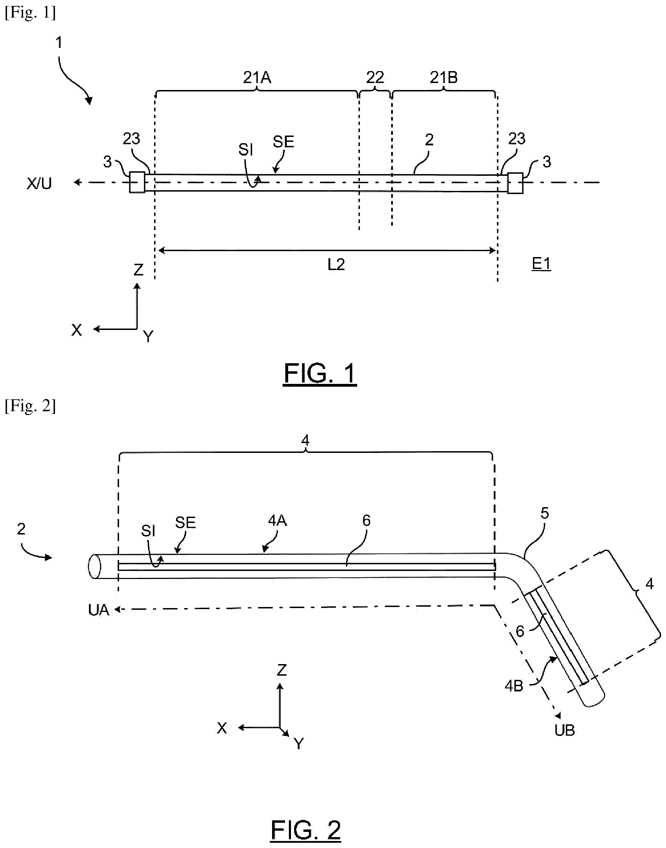

Dans l'état initial, représenté sur la figure 1, la canalisation 1 s'étend longitudinalement selon un axe X, transversalement selon un axe Y et verticalement selon un axe Z, de manière à former un repère orthogonal (X, Y, Z).

Chaque canalisation 1 comprend un tube 2 et deux extrémités de connexion 3. Il va de soi que le tube 2 comprenant deux extrémités de connexion 3 peut faire partie d'un ensemble comprenant un ou plusieurs raccords de liaison, comme cela est connu. Les extrémités de connexion sont connues en soi de l'homme du métier, aussi elles ne seront pas décrites plus en détails dans ce document.

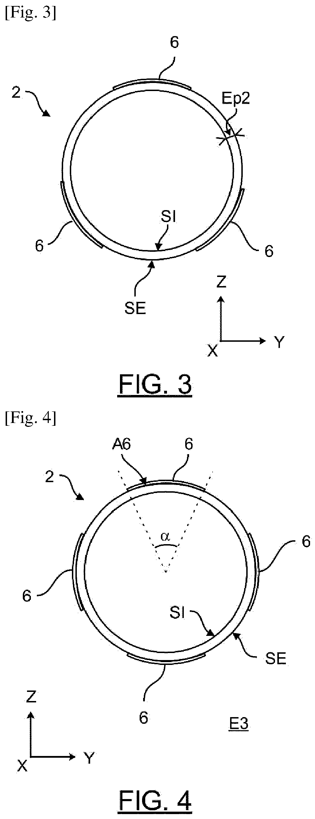

Le tube 2 présente une forme cylindrique et définit une surface intérieure SI, destinée à être en contact avec le fluide, et une surface extérieure SE opposée à la surface intérieure SI (Figures 3 et 4). De préférence, la section est circulaire.

Le tube 2 est constitué d'un matériau thermoplastique, c'est-à-dire qu'il est entièrement réalisé en matériau thermoplastique, permettant l'utilisation d'un matériau léger. Autrement dit, le tube 2 ne comporte pas de fibres de renfort dans l'épaisseur de sa paroi. De préférence, le tube 2 est réalisé en polyaryléthercétones (PAEK). Il va de soi que le tube 2 peut être réalisé dans une résine thermoplastique différente, par exemple en polyetherimide (PEI).

Toujours en référence à la figure 1, le tube 2 présente de préférence à l'état initial une longueur L2 comprise entre 500 et 3000 mm. Le tube 2 présente de plus une épaisseur Ep2 (représentée sur la figure 3) de préférence comprise entre 0,8 et 1,3 mm. La canalisation 1 est ainsi légère et simple à manipuler lors de son installation dans un circuit de fluide.

Comme représenté sur la figure 1, le tube 2 comprend une ou plusieurs portion(s) dite(s) « portion à renforcer » 21. Dans cet exemple, le tube 2 comprend deux portions à renforcer 21A, 21B, s'étendant longitudinalement selon un axe de portion U. Lorsque la canalisation 1 est dans l'état initial, l'axe de portion U est confondu avec l'axe longitudinal X.

Dans cet exemple, le tube 2 comprend également une portion dite « portion à cintrer » 22. De préférence, la portion à cintrer 22 est positionnée entre les deux portions à renforcer 21A, 21B, comme représenté sur la figure 1. Une telle portion à cintrer 22 correspond à une portion du tube 2 qui n'est pas à renforcer et plus précisément qui ne doit pas être renforcée, comme cela sera décrit plus en détails par la suite.

De préférence, le tube 2 comprend une pluralité de portions à ne pas renforcer. En particulier, les portions à ne pas renforcer correspondent aux portions à cintrer 22 et à des portions d'extrémité 23, destinées à être reliées à une extrémité de connexion 3. Ce document présente l'exemple d'un tube 2 de canalisation 1 comprenant deux portions à renforcer 21A, 21B et une portion à cintrer 22. Cependant, il va de soi que le tube 2 peut comprendre un nombre différent de portions à renforcer 21 et de portions à cintrer 22.

Il est représenté à la figure 2, un tube 2 dans l'état final. Dans cet état, le tube 2 comprend deux portions renforcées 4A, 4B (correspondant aux deux portions à renforcer 21A, 21B de l'état initial), s'étendant chacune suivant un axe de portion UA, UB, et une portion cintrée 5 (correspondant à la portion à cintrer 22 de l'état initial), positionnée entre les deux portions renforcées 4A, 4B. Autrement dit, les portions à renforcer 21A, 21B permettent de former à l'état final les portions renforcées A, 4B et la portion à cintrer 22 permet de former à l'état final la portion cintrée 5.

En référence à la figure 2, la canalisation 1 comprend une ou plusieurs bande(s) de renfort 6 s'étendant longitudinalement sur la surface extérieure SE de chaque portion à renforcer 21A, 21B du tube 2, de manière à former in fine une portion renforcée 4, comme cela sera présenté plus en détails par la suite. Par la suite, on désigne par « portion à renforcer » 21A, 21B les portions de tube 2 destinées à recevoir une ou plusieurs bandes de renfort 6, et par « portion renforcée » 4, les portions de tube 2 sur lesquelles sont appliquées des bandes de renfort 6.

De préférence, la canalisation 1 comprend au moins une bande de renfort 6 sur chaque portion renforcée 4 de tube 2. De préférence, les portions renforcées 4 d'un même tube 2 sont associées à un même nombre de bandes de renfort 6.

La figure 3 représente une vue en coupe transversale de la canalisation 1, celle-ci comprenant trois bandes de renfort 6 sur chaque portion renforcée 4, les trois bandes de renfort 6 étant réparties angulairement sur la surface extérieure SE du tube 2 et étant positionnées à équidistance les unes des autres. Sur la figure 4, la canalisation 1 comprend quatre bandes de renfort 6 sur chaque portion renforcée 4, les quatre bandes de renfort 6 étant réparties angulairement sur la surface extérieure SE du tube 2 et étant positionnées à équidistance les unes des autres.

Il va de soi que le nombre de bandes de renfort 6 pourrait être différent, il est de préférence pair. De plus, les bandes de renfort 6 sont de préférence disposées de manière symétrique afin de limiter les flambages dans deux directions opposées.

Chaque bande de renfort 6 peut s'étendre, dans un plan en coupe transversale (Y, Z), sur une plage angulaire α comprise entre 28 et 58 °, représentée sur la figure 4. Une telle plage angulaire α est fonction du rayon du tube 2. Autrement dit, chaque bande de renfort 6 s'étend de préférence sur un périmètre angulaire A6 compris entre 31 % et 64 % du périmètre extérieur du tube 2.

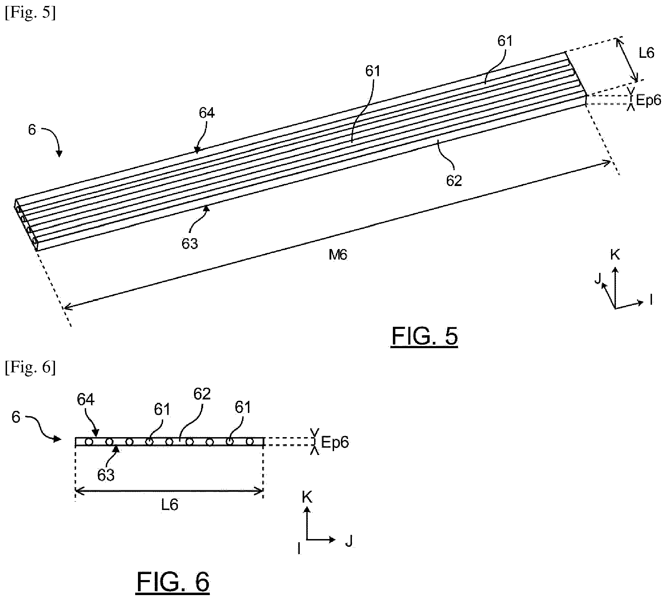

En référence aux figures 5 et 6, chaque bande de renfort 6 s'étend longitudinalement selon un axe I, transversalement selon un axe J et verticalement selon un axe K, de manière à former un repère orthogonal (I, J, K). Lorsque la bande de renfort 6 est positionnée sur la surface extérieure SE du tube 2, l'axe longitudinal I de la bande de renfort 6 est confondu avec l'axe longitudinal X de la canalisation 1.

Chaque bande de renfort 6 présente une surface inférieure 63, destinée à être en contact avec la surface extérieure SE du tube 2, et une surface supérieure 64 opposée à la surface inférieure 63.

Chaque bande de renfort 6 peut comprendre des fibres de renfort 61 imprégnées dans une résine thermoplastique 62. De préférence, la résine thermoplastique 62 de la bande de renfort 6 est identique au matériau thermoplastique du tube 2, de manière à permettre une solidarisation efficace et homogène entre chaque portion à renforcer 21A, 21B du tube 2 et la bande de renfort 6. La résine thermoplastique 62 de la bande de renfort 6 est de préférence du polyaryléthercétones (PAEK). Il va de soi que la bande de renfort 6 peut être réalisée dans une résine thermoplastique différente, par exemple en polyetherimide (PEI) compatible avec le polyaryléthercétones (PAEK).

Chaque bande de renfort 6 est configurée pour être fixée à la surface extérieure SE du tube 2 de préférence par collage par soudage. Une telle méthode de liaison est connue en soi pour l'assemblage de pièces thermoplastiques. Il va de soi que les bandes de renfort 6 peuvent être reliées mécaniquement à la surface extérieure SE du tube 2 par tout autre moyen, par exemple, par l'application de colle.

De manière préférée, les fibres de renfort 61 sont des fibres unidirectionnelles s'étendant longitudinalement selon l'axe I, comme représenté sur la figure 5. De telles fibres unidirectionnelles sont avantageuses pour réduire le flambage selon la direction desdites fibres. En outre, les fibres de renfort 61 sont de préférence des fibres de verre, des fibres de carbone ou d'aramide. De manière alternative, chaque bande de renfort 6 peut comprendre un empilement de plusieurs couches de fibres de renfort 61 unidirectionnelles pour permettre un renforcement encore plus important du tube 2.

Dans cet exemple, toujours en référence aux figures 5 et 6, chaque bande de renfort 6 présente une largeur L6 selon l'axe J comprise entre 1/8 de pouce c'est à dire 3,2 mm et ½ de pouce c'est à dire 12,7 mm. De préférence, une telle largeur L6 est sensiblement égale à ¼ de pouce (6,35 mm), de manière à couvrir 31%, 43% ou 64% de la surface extérieure SE du tube 2, respectivement pour un tube de diamètre 1 pouce (25,4 mm), ¾ de pouce (19,05 mm) ou ½ pouce (12,7 mm). Chaque bande de renfort 6 présente également une longueur M6 suivant l'axe I préalablement définie en fonction de la longueur de la portion à renforcer 21A, 21B sur laquelle la bande de renfort 6 est destinée à être appliquée. La longueur M6 est ainsi de préférence comprise entre 450 et 700 mm, de manière à appliquer une bande de renfort 6 sur toute la longueur de chaque portion à renforcer 21A, 21B. De préférence, la bande de renfort 6 est conditionnée en rouleau et couper à la longueur souhaitée.

De manière préférée, chaque bande de renfort 6 présente une épaisseur Ep6 comprise entre 0,1 et 0,4 mm. Une telle épaisseur Ep6 de la bande de renfort 6 permet de limiter l'augmentation de l'épaisseur totale du tube 2, ce qui permet de ne pas impacter la chaine de production des canalisations 1, en permettant l'utilisation de machines connues et déjà utilisées dans ce domaine. Autrement, dit, même avec une ou plusieurs bande(s) de renfort 6 déposée(s) sur la surface extérieure SE du tube 2, celui-ci peut être monté dans les machines de la ligne de production existantes et notamment dans les machines de cintrage existantes. En résumé, chaque portion renforcée 4 présente une épaisseur proche de l'épaisseur des portions non renforcées, ce qui permet de ne pas impacter le processus industriel de fabrication de la canalisation 1.

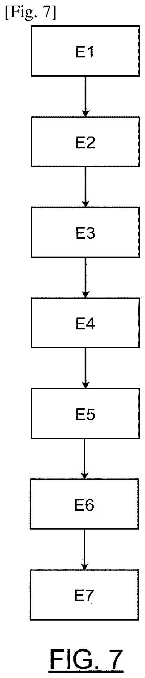

Il va dorénavant être décrit un procédé de fabrication d'une canalisation 1 selon un mode de mise en oeuvre de l'invention, en référence aux figures 7 à 9. Au début du procédé de fabrication, la canalisation 1 est initialement dans son état initial, représenté sur la figure 1 et dans lequel le tube 2 s'étend entièrement selon l'axe longitudinal X.

Le procédé comprend tout d'abord une étape de détermination E1 d'une ou plusieurs portion(s) à renforcer 21 du tube 2. L'opérateur détermine également, dans une deuxième étape de détermination E2, une ou plusieurs portion(s) à cintrer 22 du tube 2. Dans cet exemple, l'opérateur détermine deux portions à renforcer 21A, 21B et une portion à cintrer 22, la portion à cintrer 22 étant positionnée entre les deux portions à renforcer 21A, 21B, comme représenté sur la figure 1.

L'opérateur positionne alors dans cet exemple, dans une étape de positionnement E3, quatre bandes de renfort 6 sur la surface extérieure SE de la première portion à renforcer 21A du tube 2. Les bandes de renfort 6 sont positionnées de manière à être réparties angulairement sur la surface extérieure SE du tube 2, en étant positionnées à équidistance les unes des autres, comme représenté sur la figure 4. Il va de soi que le nombre de bandes de renfort 6 positionnées sur la surface extérieure SE du tube 2 pourrait être différent. L'opération est alors répétée pour le positionnement dans cet exemple de quatre bandes de renfort 6 sur la surface extérieure SE de la deuxième portion à renforcer 21B. Dans cette étape, aucune bande de renfort 6 n'est positionnée sur la surface extérieure SE de la portion à cintrer 22 qui n'est alors constituée que de matériau thermoplastique.

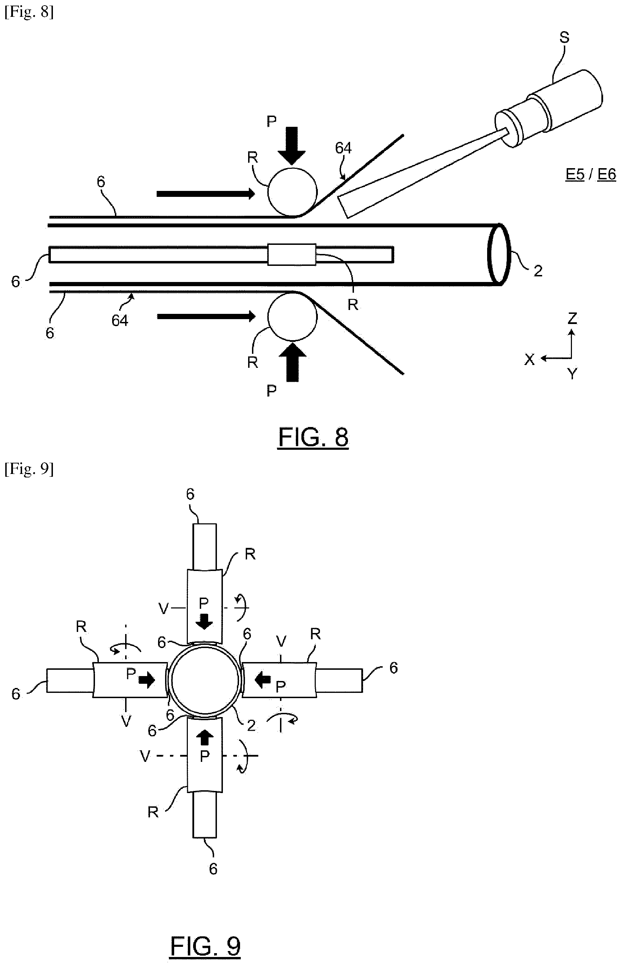

Dans un mode de mise en oeuvre préféré, l'opérateur place ensuite, dans une étape de positionnement E4, quatre organes de pression R sur la surface extérieure SE du tube 2. Les quatre organes de pression R sont de préférence répartis angulairement à la périphérie du tube 2, à équidistance des uns des autres. De préférence encore, comme représenté sur les figures 8 et 9, les quatre organes de pression R sont positionnés à la périphérie du tube 2 de manière à être centrés sur chaque bande de renfort 6, permettant une application efficace et optimale des bandes de renfort 6. Ce document présente l'exemple de quatre organes de pression R, cependant il va de soi que le nombre d'organes de pression R peut être différent, tant que les organes de pression R sont équitablement répartis à la périphérie du tube 2, de manière à assurer une pression uniforme sur la périphérie du tube 2 et éviter ainsi toute déformation du tube 2, comme cela sera décrit plus en détails par la suite.

Dans cet exemple, chaque organe de pression R se présente sous la forme d'un rouleau qui tourne autour d'un axe V (représenté sur la figure 9) et qui se déplace le long de l'axe longitudinal X du tube 2, pour permettre d'appliquer les bandes de renfort 6 sur toute leur longueur M6. Il va de soi que chaque organe de pression R sous forme d'un rouleau pourrait tout aussi bien être fixe.

Le procédé comprend ensuite, de préférence, une étape de chauffage E5 simultané, par un dispositif de chauffage S (représenté sur la figure 8), de la surface extérieure SE de la première portion à renforcer 21A du tube 2 et de la surface inférieure 63 de chaque bande de renfort 6, de manière à permettre une soudure par collage de la bande de renfort 6 sur la première portion à renforcer 21A pour former la première portion renforcée 4A. Il va de soi que dans cette étape de chauffage E5, seule la surface extérieure SE du tube 2 ou seule la surface inférieure 63 de chaque bande de renfort 6 pourrait être chauffée. A titre d'exemple, le dispositif de chauffage S peut être de type radiatif (par exemple infra rouge, laser), conductif (filière chauffante), convectif (air chaud), inductif ou mécanique (friction par ultrasons).

Dans une étape d'application E6, chaque organe de pression R applique alors simultanément un effort de pression P radial identique sur la surface supérieur 64 de chaque bande de renfort 6 positionnée sur la surface extérieure SE de la première portion à renforcer 21A du tube 2, comme représenté sur les figures 8 et 9. Une telle étape permet de déposer simultanément toutes les bandes de renfort 6. La répartition des organes de pression R et l'application d'un même effort de pression P permet l'application uniforme d'une pression à la périphérie du tube 2, de manière à s'affranchir de tout risque de déformation du tube 2. Les étapes de chauffage E5 et d'application E6 d'un effort permettent l'assemblage par soudage des bandes de renfort 6 sur le tube 2.

De préférence, dans ces deux étapes de chauffage E5 et d'application E6 d'un effort de pression P, le dispositif de chauffage S et les organes de pression R se déplacent successivement et progressivement le long de l'axe longitudinal X du tube 2, comme représenté sur la figure 8, de manière à déposer progressivement les bandes de renfort 6 sur toute la longueur de la première portion à renforcer 21A. Ce document présente l'exemple d'un tube 2 fixe le long duquel se déplacent les organes de pression R sous forme de rouleaux, cependant il va de soi que chaque organe de pression R, ainsi que le dispositif de chauffage S, pourraient tout aussi bien être fixes. Le tube 2 se déplacerait alors longitudinalement selon son axe X afin de déposer les bandes de renfort 6 sur toute la longueur de la première portion à renforcer 21A de manière similaire aux étapes de chauffage E5 et d'application E6 décrites précédemment.

Les bandes de renfort 6 sont ainsi solidarisées à la surface extérieure SE de la première portion à renforcer 21A du tube 2, formant ainsi la première portion renforcée 4A, représentée sur la figure 2. Les étapes de chauffage E5 et d'application E6 d'un effort de pression P sont ensuite répétées pour la deuxième portion à renforcer 21B, de manière à former la deuxième portion renforcée 4B.

Le procédé de fabrication comprend ensuite une étape de cintrage E7 de la portion à cintrer 22, de manière à former la portion cintrée 5. Grâce à la détermination préalable des portions à renforcer 21 et des portions à cintrer 22 et grâce l'épaisseur fine et au matériau des bandes de renfort 6, cette étape de cintrage E7 peut facilement être réalisée par les machines de production connues et communément utilisées. Aucune fibre n'est cintrée, ce qui est avantageux.

Grâce au renforcement, la chaine de production de la canalisation n'est pas impactée et la canalisation est localement renforcée, ce qui lui permet de résister au flambage.

## Revendications

1. Procédé de fabrication d'une canalisation destinée à être montée dans un circuit de fluide (C) d'un aéronef, la canalisation (1) comprenant un tube (2) et deux extrémités de connexion (3), le tube (2) étant constitué d'un matériau thermoplastique et présentant une forme cylindrique, le tube (2) définissant une surface intérieure (SI), destinée à être en contact avec le fluide, et une surface extérieure (SE) opposée à la surface intérieure (SI), le procédé de fabrication, comprenant :
• une étape de détermination (E1) d'au moins deux portions à renforcer (21) du tube (2),
• une étape de détermination (E2) d'au moins une portion à cintrer (22), la portion à cintrer (22) étant positionnée entre les deux portions à renforcer (21),
• une étape de positionnement (E3) d'au moins une bande de renfort (6) s'étendant longitudinalement sur la surface extérieure (SE) des deux portions à renforcer (21), la portion à cintrer (22) étant exempte de bande de renfort (6), puis
• une étape de cintrage (E7) de la portion à cintrer (22).

2. Procédé de fabrication selon la revendication 1, dans laquelle la bande de renfort (6) comprend des fibres de renfort (61) imprégnées dans une résine thermoplastique (62).

3. Procédé de fabrication selon la revendication 2, dans laquelle la résine thermoplastique (62) de la bande de renfort (6) est identique au matériau thermoplastique du tube (2).

4. Procédé de fabrication selon la revendication 3, dans laquelle la résine thermoplastique (62) de la bande de renfort (6) et du tube (2) est du polyaryléthercétones (PAEK).

5. Procédé de fabrication selon l'une des revendications 2 à 4, dans laquelle les fibres de renfort (61) sont des fibres unidirectionnelles.

6. Procédé de fabrication selon l'une des revendications 1 à 5, dans laquelle, dans un plan en coupe transversale, la ou les bandes de renfort (6) s'étendent sur une plage angulaire (α) comprise entre 28 et 58 ° à la périphérie de la portion renforcée (4).

7. Procédé de fabrication selon l'une des revendications 1 à 6, dans laquelle la portion renforcée (4) comprend au moins trois bandes de renfort (6) réparties angulairement sur la surface extérieure (SE) de la portion renforcée (4) et positionnées à équidistance les unes des autres.

8. Procédé de fabrication selon l'une des revendications 1 à 7, dans laquelle la bande de renfort (6) présente une épaisseur (Ep6) comprise entre 0,1 et 0,4 mm.

## Patentansprüche

1. Verfahren zur Herstellung einer Kanalisierung, die zum Einbau in einen Fluidkreis (C) eines Fluggeräts bestimmt ist, wobei die Kanalisierung (1) ein Rohr (2) und zwei Verbindungsenden (3) umfasst, wobei das Rohr (2) aus einem thermoplastischen Material besteht und eine zylindrische Form aufweist, wobei das Rohr (2) eine innere Oberfläche (SI) definiert, die bestimmt ist, mit dem Fluid im Kontakt zu sein, und eine äußere Oberfläche (SE) gegenüber der inneren Oberfläche (SI), wobei das Herstellungsverfahren umfasst:
• einen Schritt des Bestimmens (E1) von mindestens zwei zu verstärkenden Abschnitten (21) des Rohrs (2),
• einen Schritt des Bestimmens (E2) von mindestens einem zu biegenden Abschnitt (22), wobei der zu biegende Abschnitt (22) zwischen den zwei zu verstärkenden Abschnitten (21) positioniert ist,
• einen Schritt des Positionierens (E3) von mindestens einem Verstärkungsstreifen (6), der sich längs auf der äußeren Oberfläche (SE) der zwei zu verstärkenden Abschnitte (21) erstreckt, wobei der zu biegende Abschnitt (22) ohne Verstärkungsstreifen (6) ist, dann
• einen Schritt des Biegens (E7) des zu biegenden Abschnitts (22).

2. Herstellungsverfahren nach Anspruch 1, wobei der Verstärkungsstreifen (6) in einem thermoplastischen Harz (62) imprägnierte Verstärkungsfasern (61) umfasst.

3. Herstellungsverfahren nach Anspruch 2, wobei das thermoplastische Harz (62) des Verstärkungsstreifens (6) mit dem thermoplastischen Material des Rohrs (2) identisch ist.

4. Herstellungsverfahren nach Anspruch 3, wobei das thermoplastische Harz (62) des Verstärkungsstreifens (6) und des Rohrs (2) Polyaryletherketon (PAEK) ist.

5. Herstellungsverfahren nach einem der Ansprüche 2 bis 4, wobei die Verstärkungsfasern (61) eindirektionale Fasern sind.

6. Herstellungsverfahren nach einem der Ansprüche 1 bis 5, wobei sich das oder die Verstärkungsstreifen (6) in einer transversalen Schnittebene über einen Winkelbereich (α) zwischen 28 und 58° an der Peripherie des verstärkten Abschnitts (4) erstrecken.

7. Herstellungsverfahren nach einem der Ansprüche 1 bis 6, wobei der verstärkte Abschnitt (4) mindestens drei Verstärkungsstreifen (6) umfasst, die winklig auf der äußeren Oberfläche (SE) des verstärkten Abschnitts (4) verteilt und in gleichem Abstand voneinander positioniert sind.

8. Herstellungsverfahren nach einem der Ansprüche 1 bis 7, wobei der Verstärkungsstreifen (6) eine Dicke (Ep6) zwischen 0,1 und 0,4 mm aufweist.

## Claims

1. Method of manufacturing a pipe intended to be mounted in a fluid circuit (C) of an aircraft, the pipe (1) comprising a tube (2) and two connection ends (3), the tube (2) being made of thermoplastic material and having a cylindrical shape, the tube (2) defining an internal surface (SI), intended to be in contact with the fluid, and an external surface (SE) opposite the internal surface (SI), the manufacturing method, comprising:
- a step of determining (E1) at least two portions to be reinforced (21) of the tube (2),
- a step of determining (E2) at least one portion to be bent (22), the portion to be bent (22) being positioned between the two portions to be reinforced (21),
- a step of positioning (E3) at least one reinforcement band (6) extending longitudinally over the external surface (SE) of the two portions to be reinforced (21), the portion to be bent (22) being free of the reinforcement band (6), then
- a step of bending (E7) the portion to be bent (22).

2. Method of manufacturing according to claim 1, wherein the reinforcement band (6) comprises reinforcement fibers (61) impregnated with a thermoplastic resin (62).

3. Method of manufacturing according to claim 2, wherein the thermoplastic resin (62) of the reinforcement band (6) is identical to the thermoplastic material of the tube (2).

4. Method of manufacturing according to claim 3, wherein the thermoplastic resin (62) of the reinforcement band (6) and the tube (2) is polyaryletherketone (PAEK).

5. Method of manufacturing according to one of claims 2 to 4, wherein the reinforcement fibers (61) are unidirectional fibers.

6. Method of manufacturing according to one of claims 1 to 5, wherein, in a cross-sectional plane, the reinforcement band(s) (6) extend over an angular range (α) of between 28 and 58 ° at the periphery of the reinforced portion (4).

7. Method of manufacturing according to one of claims 1 to 6, wherein the reinforced portion (4) comprises at least three reinforcement bands (6) distributed angularly over the external surface (SE) of the reinforced portion (4) and positioned equidistant from each other.

8. Method of manufacturing according to one of claims 1 to 7, wherein the reinforcement band (6) has a thickness (Ep6) of between 0.1 and 0.4 mm.
